# EUROPEAN PATENT APPLICATION

(11) **EP 1 796 412 A1**
(43) Date of publication of application: **13.06.2007**
(21) Application number: 04788316.0
(22) Date of filing: 29.09.2004
(51) Int. Cl.: H04Q 7/38

(54) **CONCEALMENT COMMUNICATION SYSTEM**

(71) Applicant: Fujitsu Ltd., Kawasaki-shi, Kanagawa 211-8588 (JP)
(72) Inventor: KOBAYASHI, Kazunari, c/o Fujitsu Limited,, Kawasaki-shi, Kanagawa 2118588 (JP); KUMAGAI, Tomonori, c/o Fujitsu Limited,, Kawasaki-shi, Kanag awa 2118588 (JP); TOMITA, Tetsuo, c/o Fujitsu Limited,, Kawasaki-shi, Kanagawa 2118588 (JP)
(74) Representative: HOFFMANN EITLE
(86) International application number: PCT/JP2004/014250
(87) International publication number: WO 2006/035501

(57) **Abstract**

A reception part (111) receives RLC-PDU from an RLC processing part to extract information to be used for determining whether security is required. This information is sent to a security management part (114), which determines whether security is required. Data outputted from the reception part (111) is stored into a data buffer (112) via a data management part (116). The data, which is regarded by the security management part (114) as requiring security, is read by the data management part (116) from the data buffer (112), then encrypted by a security calculation part (113), and then stored back into the data buffer (112) again. Concealed or non-concealed data is read from the data buffer (112) and sent to an FP processing part via a transmission part (115).

## Description

### Technical Field

The present invention relates to a secure communication made between a wireless network control device and a mobile device in a CDMA system.

### Background Art

In recent years, the development of a CDMA (Code Division Multiple Access) communication system has been rapidly advancing. Not only the current main services such as voice and a still image but also a commercialized service of a wideband CDMA system (W-CDMA: Wideband-CDMA) was started. In such a situation, 3GPP (3^{rd} Generation Partnership Project http://www.3gpp.org/), which is the standardization organization of a third-generation mobile communication system, is constructing various specifications based on a W-CDMA system in order to aim for a system that can implement a service of high quality.

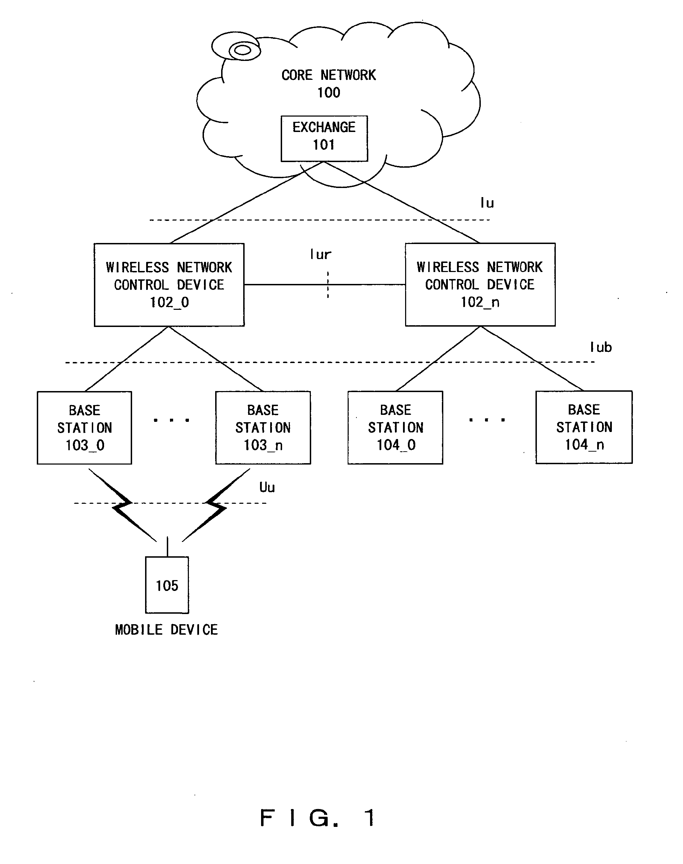

Fig. 1 is a schematic showing the outline of a current 3GPP system.

An interface between wireless network control devices 102_0~102_n and an exchange 101 is called Iu, an interface between the wireless network control devices 102_0~102_n and the wireless network control devices 102_0~102_n is called Iur, an interface between the wireless network control devices 102_0~102_n and base stations 103_0~103_n is called Iub, and an interface between the base stations 103_0~103_n and a mobile device 105 is called Uu.

In Fig. 1, a security function to ensure security on a wireless transmission path (transmission path (Uu) between the base stations 103_0~103_n and the mobile device 105) between the wireless network control devices 102_0~102_n and the mobile device 105 is provided in the wireless network control devices and the mobile device. KASUMI algorithm is used as an algorithm for a security operation. KASUMI is block encryption of 64-bit input and output, and makes encryption by using a 128-bit security key (CK) and other security parameters.

3GPP stipulates the security function in detail, and implements a security process in an RLC layer for a PS call (see the 3GPP Specification TS25.321), and implements a security process in a MAC layer for a CS call (see the 3GPP Specification TS25.322).

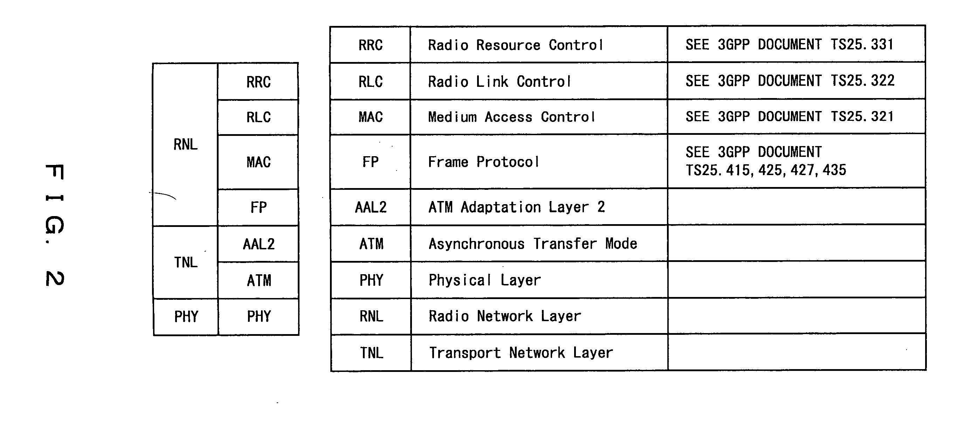

Fig. 2 is a schematic showing a representative protocol stack in a 3GPP system.

The protocol stack is composed of Physical Layer (PHY), Transport Network Layer (TNL), and Radio Network Layer (RNL) from the bottom. Transport Network Layer is composed of Asynchronous Transfer Mode (ATM), and ATM Adaptation Layer 2 (AAL2) . Additionally, Radio Network Layer is composed of Frame Protocol (FP), Medium Access Control (MAC), Radio Link Control (RLC), and Radio Resource Control (RRC).

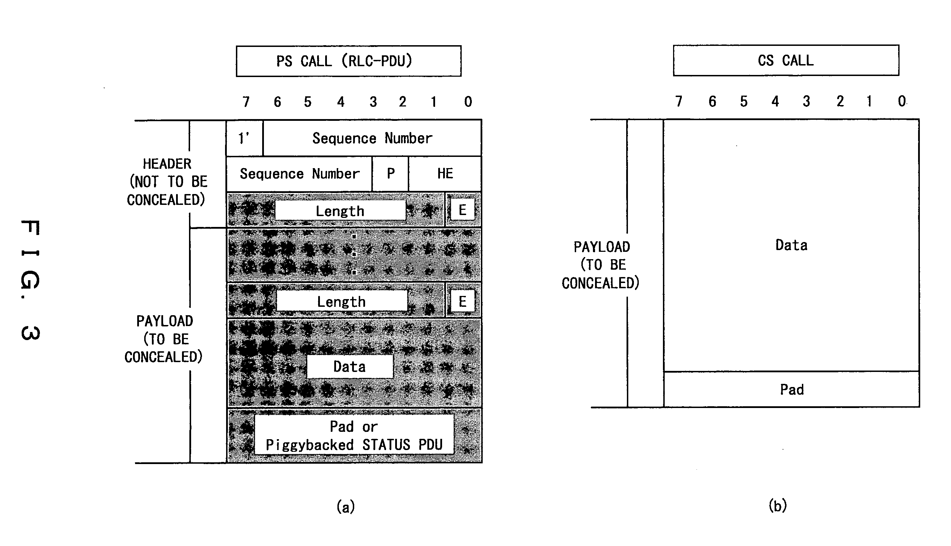

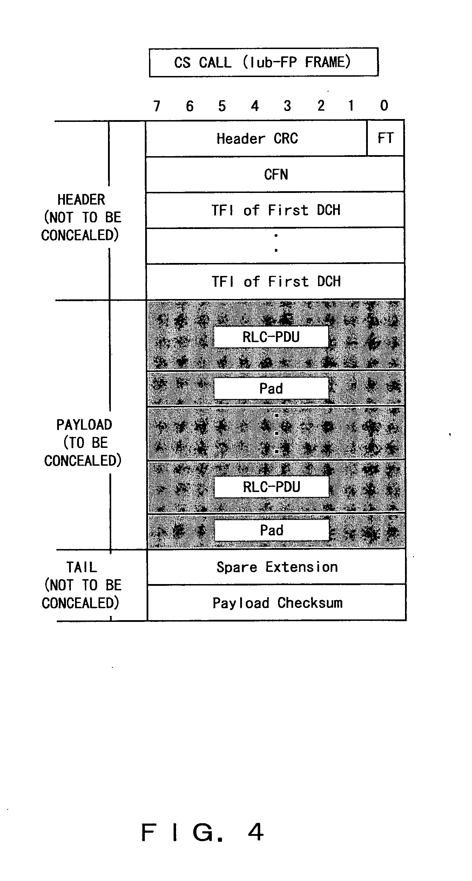

Figs. 3 and 4 are schematics showing data formats exchanged between the mobile device and a wireless network control device.

Fig. 3 shows the data formats of the RLC layer. Fig. 3 (a) shows the data format of a PS call, whereas Fig. 3(b) shows the data format of a CS call. For the PS call, its data is composed of a header and a payload. PDU is generated by partitioning SDU data of an upper layer. The header stores,a sequence number indicating the ordinal number of SDU data stored by the PDU data, Polling Bit for requesting an Acknowledge message to a reception side, and Header Extension indicating whether or not the next Length Indicator of the header succeeds. The payload stores Length Indicator indicating the end of data within the payload or the position of a pad in the payload, Extension indicating whether the next Length Indicator or data succeeds, data, padding and the like. Since data of the CS call passes through the RLC layer unchanged, it does not have a header, and is composed of only data and padding.

The target range of the security process for the PS call is the payload (excluding the header) of RLC-PDU, whereas the target range of the security process for the CS call is the entire RLC-PDU (MAC-SDU). Additionally, data of the CS call is formatted in the FP layer as shown in Fig. 4 when being transmitted to an Iub transmission path. CFN of a header within the data format shown in Fig. 4 corresponds to the sequence number of the header shown in Fig. 3A, and is the sequence number of an Iub-FP frame.

For the 3GPP security process using the KASUMI algorithm, its technique is known. Therefore, only referential documents are listed, and its detailed explanation is omitted. Although the present invention uses the KASUMI algorithm, no problems exist in the understanding of the present invention even if an algorithm within the KASUMI algorithm is handled as a black box. (For more details about the KASUMI algorithm, see the 3GPP Specification TS33.102, TS33.103, TS33.105, etc. in addition to the following documents).
[1] 3G TS33. 105V3.2.0 (1999-12) 3^{rd} Generation Partnership Project; Technical Specification Group Services and System Aspects; 3G Security; Cryptographic Algorithm Requirements.
[2] Specification of the 3GPP Confidentiality and Integrity Algorithms; Document 1: f8 and f9 Specifications.
[3] Specification of the 3GPP Confidentiality and Integrity Algorithms; Document 2: KASUMI Specification.
[4] Specification of the 3GPP Confidentiality and Integrity Algorithms; Document 3: Implementor's Test Data.
[5] Specification of the 3GPP Confidentiality and Integrity Algorithms; Document 4: Design Conformance Test Data.
[6] Mitsubishi Electric Corporation: Block Cipher Algorithms MISTY1 and MISTY2 V1.11 (1996-8).

Incidentally, with the current 3GPP system, a security operation is implemented with a software process. The security operation process can be implemented with dedicated hardware. However, the process is implemented with software in consideration of the influences of a time of a data transfer to dedicated hardware, and a time lag such as latency until an operation result returns, and the need for implementing flexible coping with a change in specifications, and complicated parameter management with software. For these reasons, the security process is implemented with software in the current 3GPP system. However, a heavy load processing is imposed on a processing function part because a complicated operation of the KASUMI algorithm must be repeatedly performed, and data must be transferred between a processor and a memory due to the use of the entire data to be concealed for the security operation process. As a result, it becomes difficult to increase the throughput of the security process.

In addition, even if the throughput of the security process is improved with an enhancement of the performance of a used device, there is a high possibility that also the performance of other devices used in the system is improved. Therefore, it is expected that the throughput of the security process function continues to be a bottleneck within the entire system.

With the current 3GPP system, a lack of the processing capability of a security function part is one factor to increase the number of pieces of equipment. However, at the present moment when the commercialized service has just started, the number of users is not large, and applications of services using a packet communication are not ready. Therefore, a data throughput required for the system is not high, and a large problem is not posed.

Currently, the 3GPP system is running as a system having a high security level. Data encryption (security function) serves as the core of the security function. The data encryption is accompanied by a complicated operation process in its nature. As described above, the operation process is implemented with software in the current 3GPP system, and its capability has a bottleneck.

Specifically, an operation processing time for implementing the complicated operation process, and a time for accessing data to be concealed, which is stored in a memory connected to an external bus, are main factors of the bottleneck of the security process throughput.

If this bottleneck is not resolved, the amount of equipment must be increased in order to improve the data throughput (the throughput of the security process) as a system.

The 3GPP system is currently a system adopted by many communication carriers. It is easily expected that the data throughput required for the entire system increases due to the number of users, which grows with the popularization of the 3GPP system, and the diversification and the functional enhancement of applications using a packet communication in the future. With the increase of the data throughput, it is evident that the demand for improving the data throughput of the system, and for reducing the cost of the system becomes high.

As such a demand increases, an improvement in the throughput of the security process (user throughput), and a reduction in the number of pieces of equipment become significant challenges.

In the current system, according to measurement results, approximately 40 percent of the processing time of the system is proved to be spent for the security processing time in terms of a processing time ratio per 1 RLC-SDU.

Measures such as an improvement in the operational frequency of a processor that executes the security operation process are taken, whereby the operation processing time of KASUMI can be possibly reduced. However, since an external bus is used to access a memory, the number of times that an access made via the bus hinders an improvement in the throughput of the security process.

For the above described reasons, a security processing system that can improve a data throughput and reduce the number of pieces of equipment (equipment cost) in the future, and can maintain the current security level must be considered for the 3GPP system.

Conventional techniques include those disclosed by Patent Documents 1, 2, etc. Patent Document 1 discloses a technique for partitioning image data, for encrypting the initial data and converting the rest of the data, and for transmitting the encrypted and converted data in a data transfer of a facsimile. Patent Document 2 discloses a technique for encrypting a portion of a data frame.
Patent Document 1: Japanese Published Unexamined Patent Application No. H9-149265
Patent Document 2: Japanese Published Unexamined Patent Application No. H10-66157

### Disclosure of Invention

An object of the present invention is to provide a system that improves the throughput of a security process, which is a bottleneck of an improvement in a data throughput, in a 3GPP security process function part, and does not degrade a security level as described above.

Another object of the present invention is to implement such a system without increasing the number of pieces of equipment, and without improving the performance of a device.

A secure communication system according to the present invention is a secure communication system for concealing a communication between a wireless network control device that can terminate a wireless protocol, and a mobile device that can also terminate a wireless protocol and makes a communication with a base station by transmitting/receiving a radio wave. This system comprises determination means for determining whether or not to require a security process for transmitted/received data, and partial encryption means for restricting the data range to be concealed of the data, and for encrypting only the restricted range of the data.

According to the present invention, the security process is executed only for a restricted range of data. Therefore, the data throughput of the system can be improved without increasing the number of pieces of equipment while maintaining a security level in a 3GPP system for which an improvement in the data throughput is demanded in the future, and an efficient system can be provided in a short time period and at low cost.

### Brief Description of Drawings

Fig. 1 is a schematic showing the outline of a current 3GPP system;
Fig. 2 is a schematic showing a representative protocol stack in the 3GPP system;
Fig. 3 is schematics showing the formats of RLC-PDU, for which a security process is to be executed, in the 3GPP system;
Fig. 4 is a schematic showing the frame format of Iub-FP for a CS call;
Fig. 5 is a schematic explaining RLC process procedures for a PS call;
Fig. 6 is a schematic showing a configuration and operations of a security function part on a transmission side;
Fig. 7 is a schematic showing a configuration and operations of a security function part on a reception side;
Fig. 8 is a schematic exemplifying a security parameter management table within a security management part;
Fig. 9 is a schematic showing the outline of a process flow in the security function part;
Fig. 10 is a schematic showing the outline of a process flow in the security function part;
Fig. 11 shows a process flow of the security management part;
Fig. 12 is a schematic showing one example of a specific configuration of a method for executing a security process; and
Fig. 13 is a schematic showing another example of a specific configuration of the method for executing the security process.

### Best Mode of Carrying Out the Invention

A system according to a preferred embodiment of the present invention is a system, which is configured with wireless network control devices and a mobile device, and has a function for executing a security process for data transferred wirelessly in the wireless network control devices and the mobile device in order to ensure security on a wireless transmission path. The security function part includes a reception processing part, a data management part, a data buffer, a security operation processing part, and a security management part, and is provided with a function for receiving data and extracting necessary information, a function for holding and managing received data, a function for implementing a security operation, and a function for deciding a data range for which the security operation is to be executed, thereby enabling an efficient security process to be executed.

Additionally, the reception processing part has a function for extracting information, which is required by the security management part, from the received data, and for notifying the security management part of suitable information.

The data management part has a function for storing data, which is received by the reception processing part, in a data buffer, and a function for performing a control to transfer the data held in the data buffer either to the security operation processing part or to the transmission processing part according to an instruction from the security management part.

The data buffer has a function for holding and managing data before the security process is executed, and data after the security process is executed.

The security operation processing part has a function for executing the security operation process for the data received from the data management part by using security parameters instructed from the security management part.

The security management part includes a control part and a security parameter management table. The control part has a function for determining whether or not to require the security process for the data held in the data buffer based on information notified from the reception processing part, and for notifying the data management part of the result of the determination.

Furthermore, the security parameter management table within the security management part has a function for holding/managing security parameters for each data piece, and for notifying the security operation processing part of suitable security parameters.

As described above, the format of RLC-PDU, and the frame format of Iub-FP for a CS call, for which the security process is to be executed in the 3GPP system, are shown respectively in Figs. 3 and 4.

An RLC protocol is a protocol of a communication made between a wireless network control device and the mobile device. In the current 3GPP system, a transmission side device executes the security process for all of RLC-PDUs for which the execution of the security process is set, and a reception side device executes a security release process for received RLC-PDUs.

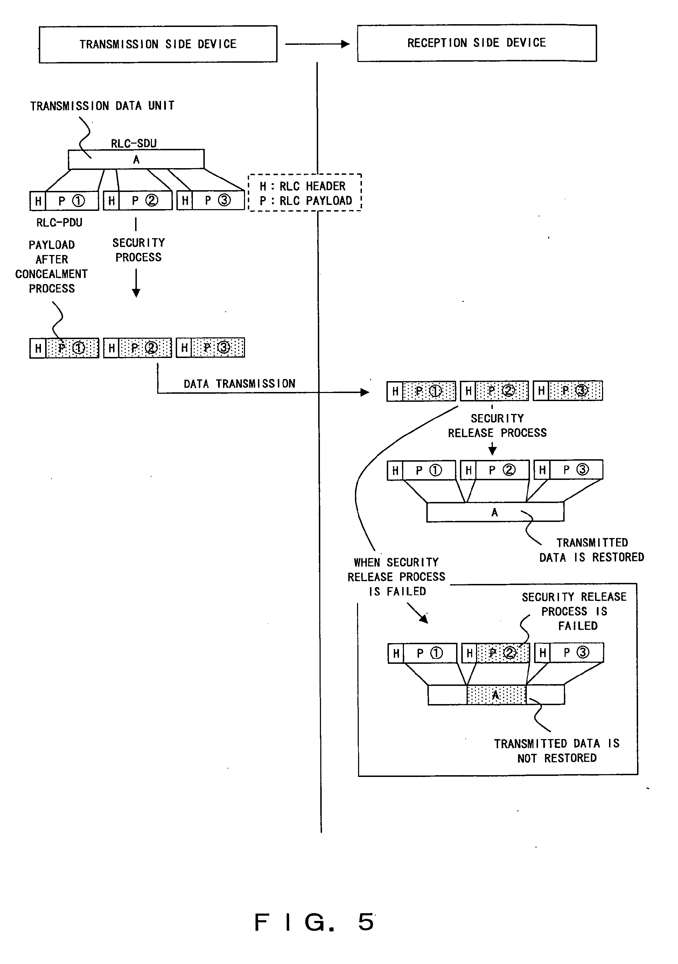

Fig. 5 is a schematic explaining RLC process procedures for a PS call.

In the case of a PS call, as shown in Fig. 5, RLC-SDU is partitioned by preset PDU length with the RLC protocol of the transmission side device, and an RLC header is attached to each piece of partitioned data, so that RLC-PDUs are generated.

The security processing part executes the security process for the payload of each of the RLC-PDUs by using different security parameters, respectively for the RLC-PDUs.

The RLC protocol of the reception side device, which receives the RLC-PDUs for which the security process has been executed, assemblies RLC-SDU by combining the data of the partitioned RLC-PDUs after executing the security release process for each of the RLC-PDUs. Accordingly, if one or more pieces of data are improperly transmitted/received among the RLC-PDUs partitioned from one RLC-SDU by the transmission side device, the RLC-SDU cannot be properly restored. Additionally, as a security parameter used to execute the security process for a PS call, also SN (Sequence Number), which is included in an RLC header, is used. SN is incremented for each RLC-PDU, and a different value is assigned.

In the case of a CS call, the length of RLC-SDU is short. Therefore, the partitioning process is not executed with the RLC protocol, and RLC-SDU becomes RLC-PDU unchanged in normal cases. Additionally, as a security parameter used to execute the security process for a CS call, also CFN (Connection Frame Number), which is included in an Iub-FP header, is used. CFN is incremented in a cycle of 10 ms, and a different value is assigned to each Iub-FP frame.

A method according to a preferred embodiment of the present invention pays attention to the data unit of RLC-SDU, and uses a characteristic such that RLC-SDU is partitioned into a plurality of RLC-PDUs and transmitted/received for a PC call, and a characteristic such that different values are assigned to SN and CFN, which are used as security parameters, for each RLC-PDU or each Iub-FP frame. The method aims at reducing the load of the security processing part by restricting a security process range while maintaining the security of RLC-SDU.

The method according to the preferred embodiment of the present invention comprises:
(a) a step of negotiating, between transmission and reception side devices, a data range to be concealed when starting the security process;
(b) a step of extracting information, which are required for the security process and required to determine whether or not to execute the security process, from data received by the security function part;
(c) a step of determining whether or not to require the security process based on the information extracted in (b);
(d) a step of executing the security process according to the result of the determination made in (c); and
(e) a step of transmitting, to the next layer, data for which the security process has been executed, and data for which the security process is determined not to be executed.

The above described steps are described in detail below.

Initially, configurations of security function parts within a wireless network control device and the mobile device, which are intended to implement the system according to the present invention, are described.

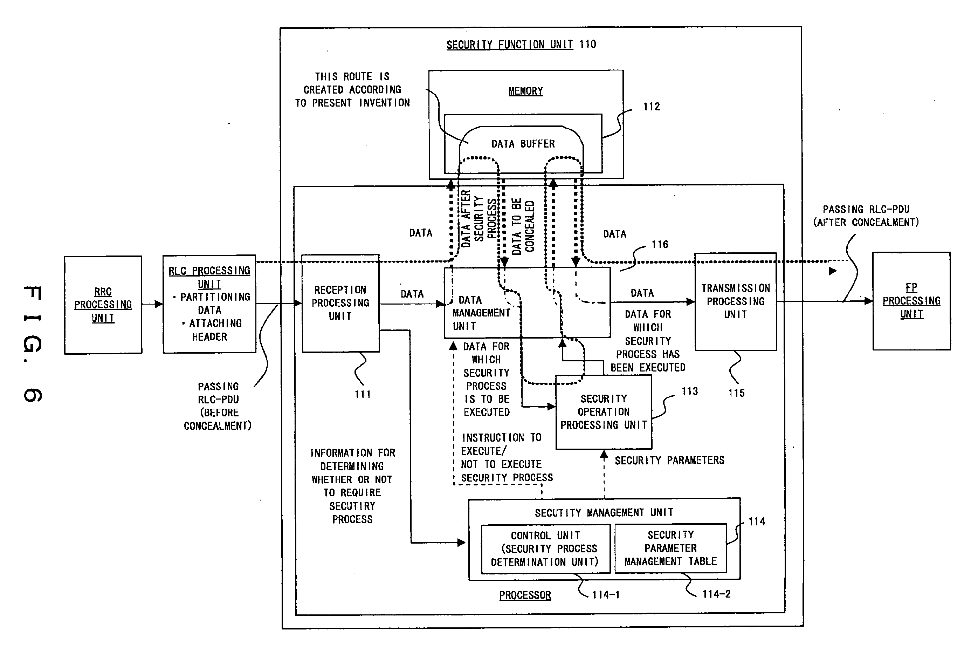

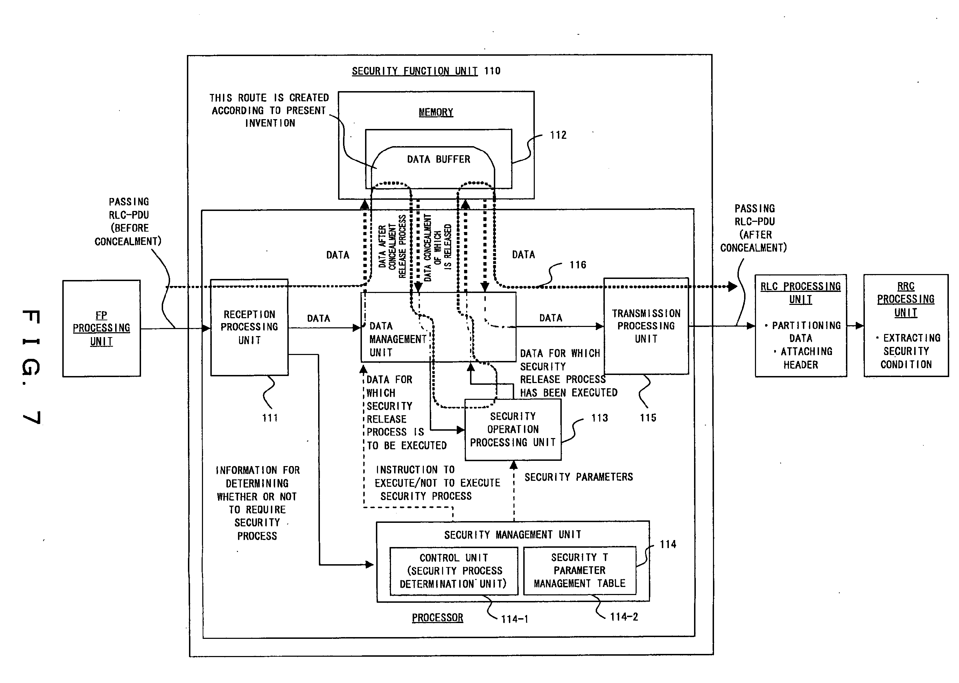

Fig. 6 shows the configuration and operations of the security function part on the transmission side, whereas Fig. 7 shows the configuration and operations of the security function part on the reception side.

The security function parts 110 within the wireless network control devices and the mobile device respectively comprise a reception processing part 111, a data management part 116, a data buffer 112, a security operation processing part 113, a security management part 114, and a transmission processing part 115.

The reception processing part 111 receives RLC-PDU in case of a PS call, extracts information, which are required for the security process and required to determine whether or not to require the security process, from the RLC-PDU, and notifies the security management part of the contents of the information. The information required to determine whether or not to require the security process is a sequence number SN, CFN, Length Indicator, etc. as will be described later.

The data management part 116 passes data held in the data buffer 112 to the security operation processing part 113 or the transmission processing part 115 according to an instruction from the security management part 114.

The data buffer 112 is a buffer for storing RLC-PDU, and has a function for holding/managing RLC-PDU received by the reception processing part 111.

The security operation processing part 113 executes the security process using KASUMI algorithm for the data passed from the data management part 116 with the use of security parameters instructed from the security management part 114.

The security management part 114 includes a control part 114-1 and a security parameter management table 114-2. The control part 114-1 determines whether or not to require the security process for the RLC-PDU held by the data management part 116, and notifies the data management part 116 of the result of the determination. Additionally, if the security process is determined to be executed as a result of the determination, the control part 114-1 reads suitable security parameters from the security parameter management table 114-2 for the RLC-PDU, and notifies the security operation processing part of the read parameters.

The security parameter management table 114-2 holds security parameter information, which is preset for each RLC entity, for each RLC entity.

The transmission processing part 115 transmits, to the next layer, the RLC-PDU which is passed from the data management part 116 and for which the security process is not executed, and the RLC-PDU which is passed from the security operation processing part 113 and for which the security process has been executed.

A method for deciding a security process range in the transmission and the reception side devices is described.

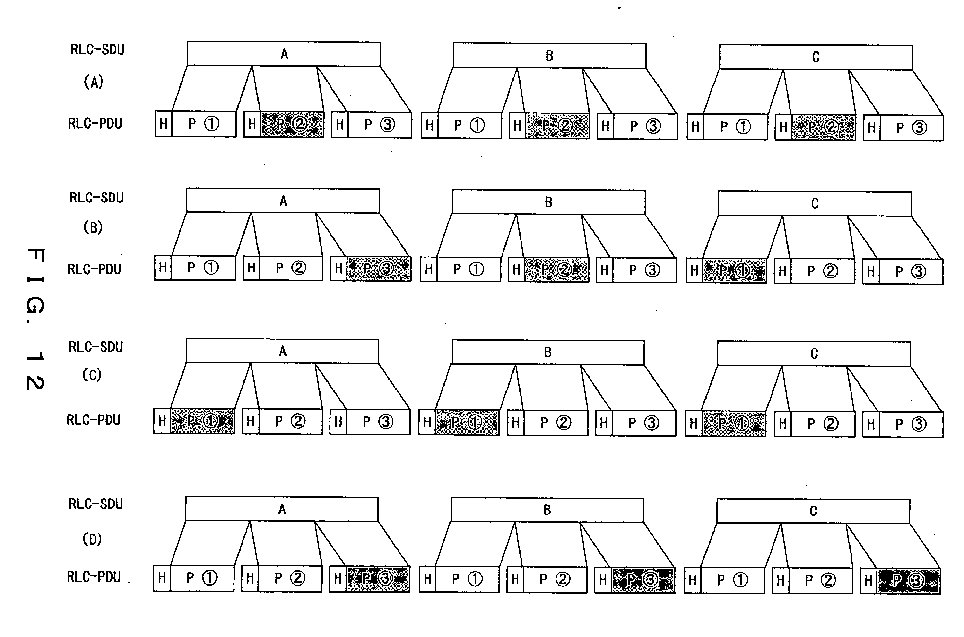

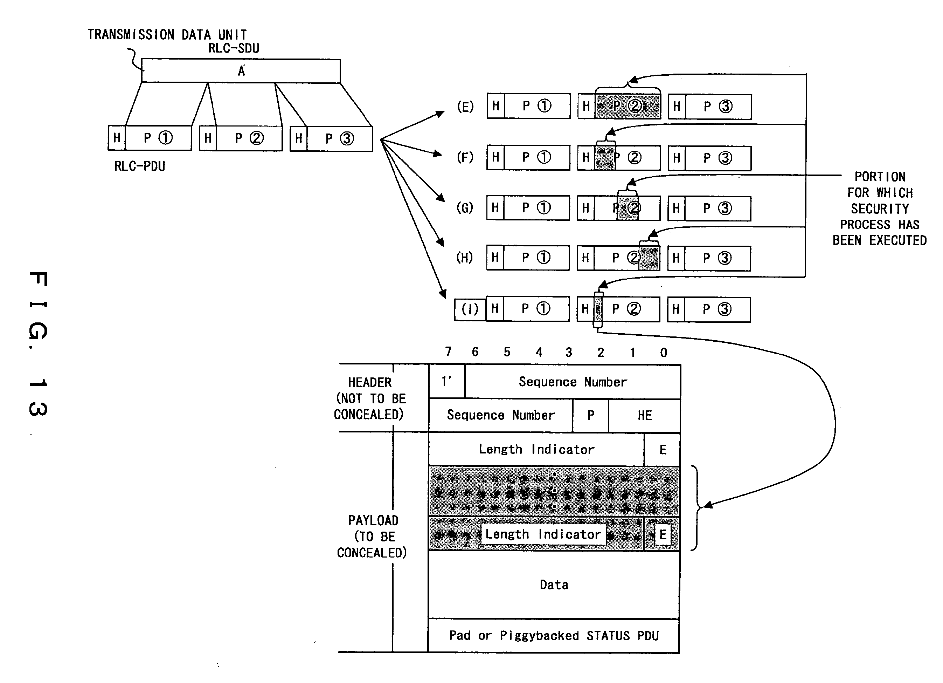

As a method for stipulating a data range, for which the security process is to be executed, the following methods are considered.
1. a method for executing the security process for RLC-PDU only if SN or a particular digit of SN within an RLC header is a multiple of an integer N
   The integer N is determined between a wireless network control device and the mobile device, and the security process is executed for RLC-PDU only if SN within an RLC header can be divided by N.
   A specific configuration is shown in Fig. 12(A). The security process is executed for hatched portions of RLC-PDUs.
2. a method for executing the security process for RLC-PDU only if SN within an RLC header is a predetermined number
   A wireless network control device and the mobile device comprise a table that lists SNs for which the security process is to be executed, and the security process is executed for RLC-PDU only if a number within the table matches the SN of the RLC-PDU. Since the length of SDU is not uniform, an SN for which the security process is to be executed at least once is empirically estimated and set for one RLC-PDU.
   A specific configuration is shown in Fig. 12(B). The security process is executed for hatched portions of RLC-PDUs .
3. a method for executing the security process only if RLC-PDU corresponds to the beginning of RLC-SDU
   LI. (Length Indicator) within RLC-PDU is verified, and the security process is executed for the RLC-PDU only if the RLC-PDU corresponds to the beginning of RLC-SDU. By viewing LI, in which RLC-PDU the data of RLC-SDU ends can be known. Therefore, RLC-PDU next to the last RLC-PDU is determined to be the beginning.
   A specific configuration is shown in Fig. 12(c). The security process is executed for hatched portions of RLC-PDUs .
4. a method for executing the security process only if RLC-PDU corresponds to the last RLC-PDU of RLC-SDU
   LI (Length Indicator) within RLC-PDU is verified, and the security process is executed for the RLC-PDU only if the RLC-PDU corresponds to the last PDU of RLC-SDU. The last PDU is known from LI.
   A specific configuration is shown in Fig. 12 (D) . The security process is executed for hatched portions of RLC-PDUs .
5. a method for executing the security process for RLC-PDU only if Polling bit within an RLC header is 1
   The Polling bit within RLC-PDU is verified, and the security process is executed for RLC-PDU only if the RLC-PDU corresponds to the last PDU of RLC-SDU. If the Polling bit is 1, a request to return Acknowledge message is issued to the reception side, and this is included in the last PDU. Therefore, whether or not RLC-PDU is the last PDU can be determined by judging whether or not the Polling bit is 1.
6. a method for executing the security process only for the first LI (Length Indicator) within RLC-PDU
   The security process is executed only for an LI within RLC-PDU. If the transmission side device executes the security process for all of LIs, the reception side device cannot identify a range the security of which is released. Therefore, the security process is executed only for the first LI. This uses the fact that RLC-SDU cannot be restored on the reception side if LI cannot be decrypted.
   Additionally, the security process is not executed for RLC-PDU where LI does not exist.
   A specific configuration is shown in Fig. 13(I). The security process is executed for a hatched portion of RLC-PDU.
7. a method for executing the security process only for a valid data portion within RLC-PDU
   The security process is executed only for a valid data portion (a payload from which portions such as LI, Padding, etc. are excluded) within RLC-PDU.
   In this case, the security process is not executed for RLC-PDU where a valid data portion does not exist (RLC-PDU where only an RLC header, LI, and Padding exist).
   A specific configuration is shown in Fig. 13(E). The security process is executed for a hatched portion of RLC-PDU.
8. a method for executing the security process only for the first N bits of a payload within RLC-PDU, N bits apart from the beginning by a predetermined number of bits, or N bits from the end
   An integer N is determined between a wireless network control device and the mobile device, and the security process is executed only for the first N bits of the payload (a portion excluding an RLC header) within RLC-PDU.
   Specific configurations are shown in Figs. 13 (F) to 13 (H). The security process is executed for hatched portions of RLC-PDUs.
9. a method for executing the security process for RLC-PDU only if CFN within an Iub-FP header is a multiple of an integer N
   The integer N is determined between a wireless network control device and the mobile device, and the security process is executed for RLC-PDU stored in Iub-FP only if CFN within an Iub-FP header can be divided by N.
   The security process is executed for hatched portions of RLC-PDUs in a similar manner as in Fig. 12(A).
10. a method for executing the security process for RLC-PDU only if CFN within an Iub-FP header is a predetermined number

A wireless network control device and the mobile device comprise a table that lists CFNs for which the security process is to be executed, and the security process is executed for RLC-PDU stored in Iub-FP only if CFN within the table matches CFN within the Iub-FP.

The security process is executed for hatched portions of RLC-PDUs in a similar manner as in Fig. 12(B).

Since the methods described in the above 1 to 6 are methods using SN, LI, Polling bit, etc. within RLC-PDU, they are valid only for a PS call.

Additionally, the methods described in the above 9 and 10 are methods using CFN, etc. within Iub-FP, and valid only for a CS call.

Also a method for executing the security process only for a portion of some data frames can be implemented by combining any of the methods, which are described in the above 1 to 5, 9 and 10, for executing the security process for some data frames, and any of the methods, which are described in the above 6 to 8, for executing the security process for a portion of a data frame.

The value of N described in the above 1, 8, and 9, and the predetermined values described in the above 2 and 10 among the parameters used with the above methods must be predetermined between a wireless network control device and the mobile device before the security process is started.

Additionally, also as the methods for deciding a security process range, which are described in the above 1 to 10, the same method must be adopted between a wireless network control device and the mobile device.

As methods for making the parameters and the method identical between a wireless network control device and the mobile device, the following methods are considered.
(1) a method for setting the above described parameters as system parameters in a wireless network control device and the mobile device
   Necessary parameters and a method for deciding a security process range are preset as the system parameters of the wireless network control device and the mobile device.
(2) a method for deciding the parameters and a security process range(?) by making a negotiation between a wireless network control device and the mobile device before the security process is started

Necessary parameters, and a method for deciding a security process range, and the like are negotiated between a wireless network control device and the mobile device, before the security process is started.

This method is implemented by using "RRC SECURITY MODE COMMAND" and "RRC SECURITY MODE COMPLETE", which are transmitted/received between a wireless network control device and the mobile device before the security process is started or when a security parameter is changed, and by inserting necessary parameters and information required to determine a method for deciding a security process range in these messages. Namely, a command for setting parameters for the security process and an encryption method is newly provided in the RRC SECURITY MODE COMMAND, which is currently stipulated by the 3GPP and is a command for setting security in the RRC layer. Then, the command for setting parameters and an encryption method within the RRC SECURITY MODE COMMAND is issued from the wireless network control device, and the RRC SECURITY MODE COMMAND COMPLETE message, which indicates that the setting is made, is received from the mobile device, whereby the security process is set between the wireless network control device and the mobile device.

Procedures to extract information for determining whether or not to require the security process from RLC-PDU are described.

The reception processing part 111 extracts information, which is required to determine whether or not to require the security process, from received RLC-PDU according to a method for deciding the determination of the security process, notifies the security management part 114 of the extracted information, and stores the RLC-PDU in the data buffer 112.

Information to be extracted by the reception processing part 111 does not exist in some cases depending on a method for determining the security process. In this case, received RLC-PDU is stored in the data buffer 112 without extracting information from the RLC-PDU.

Procedures to determine whether or not to execute the security process for RLC-PDU received by the reception processing part 111 are described.

The control part 114-1 within the security management part 114 determines whether or not to execute the security process for RLC-PDU based on information about the RLC-PDU notified from the reception processing part 111.

The control part 114-1 within the security management part 114 makes a comparison between the information about the RLC-PDU notified from the reception processing part 111 and a predetermined condition for deciding a security process range, determines whether or not to execute the security process for the RLC-PDU, and notifies the data management part 116 of the result of the determination.

If the security process is determined to be executed for the RLC-PDU as a result of the above comparison, the control part 114-1 within the security management part 114 extracts security parameters, which are required to execute the security process for the RLC-PDU, from the security parameter management table 114-2, and notifies the security operation processing part 113.

Procedures to execute the security process for a data region for which the security process is determined to be executed are described.

The security operation processing part 113 executes the security operation process using KASUMI algorithm for data that is specified and transmitted from the data management part 116. As security parameters, such as a security key, etc. required for the security operation process, parameters notified from the security management part 113 are used.

Upon termination of the security process for the specified data, the security operation processing part 113 stores the data, for which the security process has been executed, in the data buffer 112 via the data management part 116.

A process executed when RLC-PDU stored in the data buffer is transmitted is described.

RLC-PDU, which is stored in the data buffer 112 and for which the control part 114-1 within the security management part 114 determines to execute the security process and the security operation processing part 113 has executed the security process, and RLC-PDU, for which the control part 114-1 within the security management part 114 determines not to execute the security process, are transmitted from the transmission processing part 115 to the next layer.

A method for determining a data range to be concealed, and a method for changing a parameter used to make the determination are described.

As the method for determining a security process range, and parameter values for the determination, the followings are considered as described above.
(1) a method for setting the parameter values for the determination as system parameters in a wireless network control device and the mobile device
(2) a method for deciding a security process range and the parameters by negotiating between a wireless network control device and the mobile device before the security process is started
   By using the method described in (2) among the above described methods, a method for determining a security process range, and the parameter values for the determination can be changed while a call is connected.

A method for determining a security process range, and the parameter values for the determination are changed while a call is connected, whereby the security of a communication can be further improved.

Figs. 6 and 7 show a preferred embodiment of the security processing parts within a wireless network control device and the mobile device, which are intended to implement the present invention. As described above, the security processing part 110 is composed of the reception processing part 111, the data management part 116, the data buffer 112, the security management part 114, the security operation processing part 113, and the transmission processing part 115.

Figs. 6 and 7 also depict the flows of data. In the security processing part on the transmission side of Fig. 6, data is input to the reception processing part 111 via an RRC processing part and an RLC processing part. The reception processing part 111 extracts information, such as LI, etc. , for determining whether or not to require the security process from RLC-PDU, which is input data and for which the security process is not executed yet, and transmits the extracted information to the security management part 114. Additionally, the data itself is input to the data management part 116. The data itself is stored in the data buffer 112 via the data management part 116. When the security management part 114 determines whether or not to execute the security process, an instruction indicating whether or not to execute the security process is input to the data management part 116, and at the same time, parameters for executing the security process are input to the security operation processing part 113 if the security process is executed. Upon receipt of the instruction to execute the security process for the data from the security management part 114, the data management part 116 reads the data from the data buffer 112, and passes the read data to the security operation processing part 113. The data management part 116 does not read the data from the data buffer 112 if the security process is not executed. The security operation processing part 113 executes the security process for the data, and returns the data to the data management part 116. The data management part 116 stores the data, for which the security process has been executed, in the data buffer 112. Next, the data management part 116 reads the data, for which the security process has been executed, or the data, for which the security process is not executed, from the data buffer 112, transmits the data to the transmission processing part 115, and passes the data to the FP processing part as RLC-PDU for which the security process has been executed.

Fig. 7 shows the flow of data on the reception side.

When RLC-PDU for which the security process has been executed is input from the FP processing part to the reception processing part 111, information for determining whether or not the security process has been executed is transmitted to the security management part 114. Additionally, the data itself is stored in the data buffer 112 via the data management part 116. Upon receipt of an instruction indicating that the security process has been executed for the data from the security management part 114, the data management part 116 reads the data from the data buffer 112, and transmits the read data to the security operation processing part 113. Security parameters are transmitted from the security management part 114 to the security operation processing part 113, and the data management part 116 stores the data the security of which is released in the data buffer 112 after the security operation processing part 113 executes the security release process for the data. Thereafter, the data the security of which is released, or data for which the security process is not executed is read from the data buffer 112, and passed to the RLC processing part via the transmission processing part 115 as unconcealed RLC-PDU.

In Figs. 6 and 7, conventionally, all of RLC-PDUs are once read from the data buffer 112, and the security process and the security release process are executed. However, according to the preferred embodiment of the present invention, the flows of data transferred without executing these processes occur, and the amounts of data for which the security process and the security release process are executed are reduced, thereby reducing a load imposed on the system.

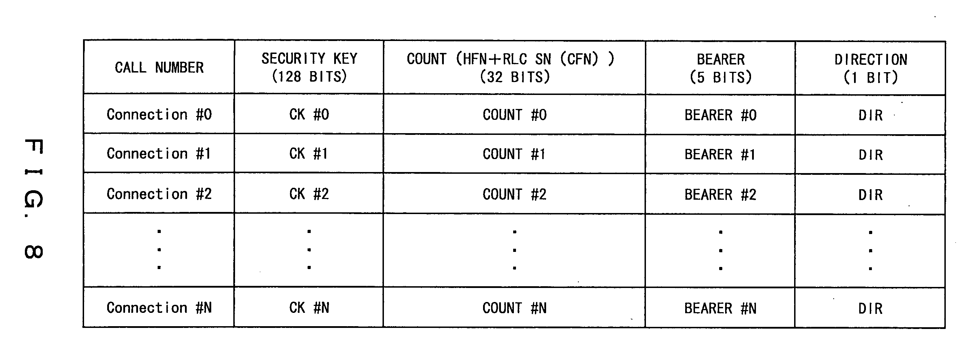

Fig. 8 is a schematic exemplifying the security parameter management table within the security management part.

Regions for storing a security key (CK), COUNT(HFN+RLC SN(CFN)), BEARER, and DIRECTION are prepared for each call.

The security key is given from the upper layer, and set to a different value for each RLC entity.

COUNT is composed of HFN (20 bits) + RLC SN (12 bits) for RLC AM (PS call). Or, COUNT is composed of HFN (24 bits) + CFN (8 bits) for RLC TM (CS call). For HFN, only its initial value is given from the upper layer, and incremented by 1 each time RLC SN or CFN completes its period. RLC SN is incremented for each RLC-PDU. CFN is incremented in units of 10 ms.

BEARER uses RB Identity included in "RRC RADIO BEARER SETUP", etc., which is transmitted/received between a wireless network control device and the mobile device.

DIRECTION is not particularly stipulated. Therefore, a fixed value common to all of calls is set.

Since these parameters are unique to KASUMI algorithm, see the above described referential documents. Note that the present invention is not limited to KASUMI algorithm. If another security process algorithm is used, a security parameter management table of parameters unique to the algorithm is used.

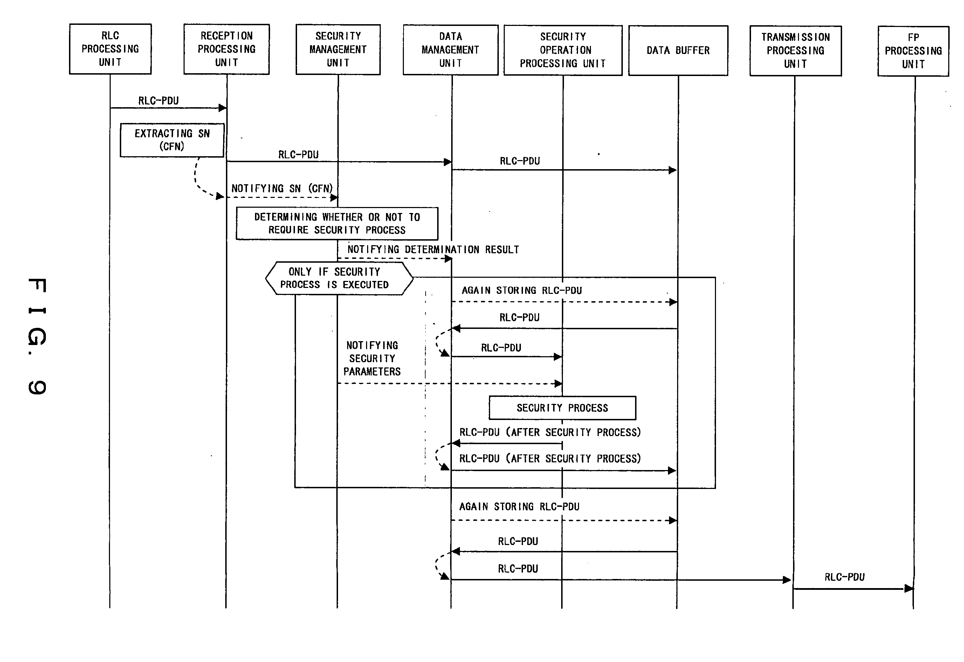

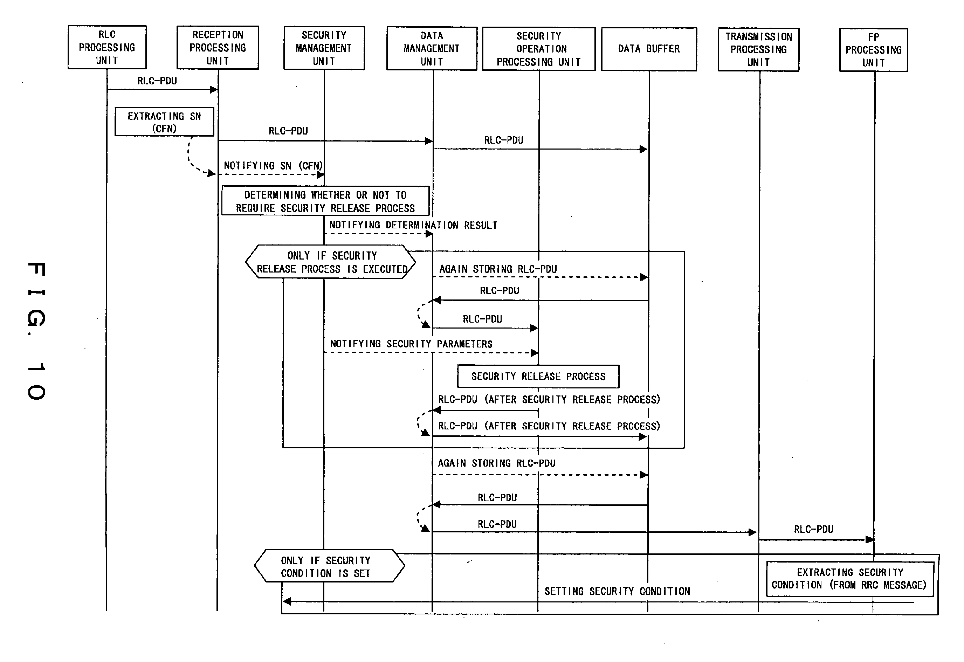

Figs. 9 and 10 are schematics showing the outlines of process flows in the security function parts.

Fig. 9 shows a transmission process. The reception processing part extracts information required to determine whether or not to require the security process from received RLC-PDU, notifies the security management part of the information, and stores the RLC-PDU in the data buffer. The security management part determines whether or not to require the security process based on the notified information, and notifies the data management part of the result of the determination. If the security process is determined to be executed as a result of the determination, the security process procedures are executed, and RLC-PDU for which the security process has been executed is again stored in the data buffer.

The RLC-PDU for which the security process is determined to be required and the security process has been executed, and the RLC-PDU for which the security process is determined not to be required are transmitted to the next layer by the transmission processing part.

Fig. 10 shows a reception process. The data flow shown in this figure is almost the same as that of Fig. 9 except that the security release process is executed for a signal. Namely, the reception processing part extracts, from received RLC-PDU, information required to determine whether or not the security process has been executed, notifies the security management part of the information, and stores the RLC-PDU in the data buffer. The security management part determines, based on the notified information, whether or not to require the security release process, and notifies the data management part of the result of the determination. If the security release process is determined to be executed as a result of the determination, the security release procedures are executed, and the RLC-PDU for which the security release process has been executed is again stored in the data buffer.

RLC-PDU for which the security release process is determined to be required and the security release process has been executed, and RLC-PDU for which the security release process is determined not to be required are transmitted to the next layer by the transmission processing part.

Additionally, if a security condition is set during a communication, and a security parameter or a security processing method is changed as indicated by the bottom of Fig. 10, the security is further enhanced.

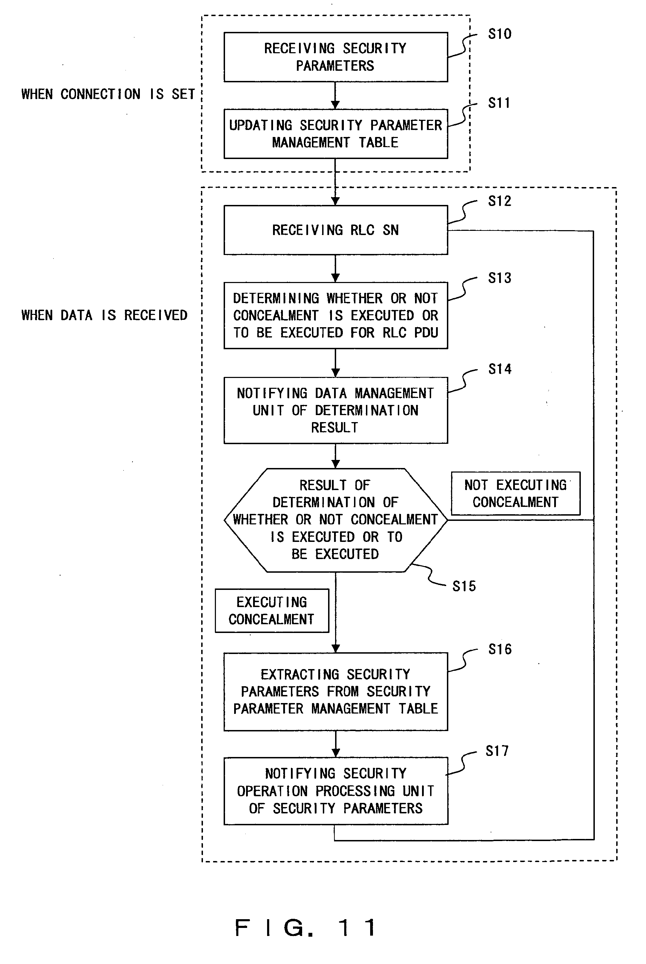

Fig. 11 is a process flow of the security management part.
steps S10 and S11 are a process for setting a connection. Upon receipt of security parameters in step S10, the security parameter management table is updated in step S110. This process is executed as occasional demands. steps S12 to S17 are a process executed when data is received. In step S12, information, such as a sequence number SN, etc., for obtaining whether or not to require the security process for RLC-PDU, or whether or not the security process has been executed for the RLC-PDU is received. In step S13, whether or not the security process is required to be executed for the RLC-PDU, or whether or not the security process has been executed is determined. In step S14, the result of the determination is notified to the data management part. In step S15, the process is branched depending on the result of the determination of whether or not the security process has been executed. If the security process has not been executed yet, the flow goes back to step S12. If the security process has been executed, the security parameters are extracted from the security parameter management table in step S16. In step S17, the security parameters are notified to the security operation processing part, and the flow goes back to step S12.

As described above, it is easily expected that the demand for improving the throughput of the entire system, and for reducing the cost of the system will rise because of an increase in the number of users, the diversification and the functional enhancement of applications using a packet communication in a future 3GPP system.

As a characteristic of the 3GPP system, a high security level can be raised. To ensure security on a wireless transmission path, a 3GPP security process using a complicated operation algorithm and a complicated encryption parameter configuration is executed. In the meantime, since a complicated security process is executed to improve a security level, the security function can be a bottleneck of an increase in the process throughput of terminating devices (a wireless network control device and the mobile device).

However, according to the preferred embodiment of the present invention, the process throughput of terminating devices can be improved by reducing the load of the security process on the terminating devices while ensuring the security level of the system. Up to now, it is general to take measures for increasing the number of pieces of equipment in order to improve the throughput of the security process. According to the preferred embodiment of the present invention, however, the number of pieces of equipment can' be suppressed, and a development cost and a development period can be reduced.

Additionally, a plurality of methods for determining whether or not to require the security process according to the preferred embodiment of the present invention are combined and used, or the above methods are switched while a call is connected, whereby also the security level can be improved more than a conventional system.

## Claims

1. A secure communication system for concealing a communication between a wireless network control device that can terminate a wireless protocol, and a mobile device that can also terminate a wireless protocol and communicates with a base station by transmitting/receiving a radio wave, comprising:
determination means for determining whether or not to require a security process for transmitted/received data; and
partial encryption means for restricting a data range to be concealed of the data according to a determination made by said determination means, and for encrypting only the restricted range of the dada.

2. The secure communication system according to claim 1, wherein
the restricted data range is some frames among a plurality of frames configuring the data.

3. The secure communication system according to claim 1, wherein
the restricted data range is a portion of a frame configuring the data.

4. The secure communication system according to claim 1, wherein
the restricted data range is a portion of some frames among a plurality of frames configuring the data.

5. The secure communication system according to claim 1, the secure communication system being a secure communication between a wireless network control device and a mobile device, which is stipulated by 3^{rd} Generation Partnership Project (3GPP).

6. The secure communication system according to claim 5, wherein
the security process is executed for RLC-PDU only if a sequence number within an RLC header is a multiple of a certain integer.

7. The secure communication system according to claim 5, wherein
the security process is executed for RLC-PDU only if a sequence number within an RLC header is a predetermined number.

8. The secure communication system according to claim 5, wherein
the security process is executed for RLC-PDU only if the RLC-PDU corresponds to the beginning of RLC-SDU.

9. The secure communication system according to claim 5, wherein
the security process is executed for RLC-PDU only if the RLC-PDU corresponds to the last RLC-PDU of RLC-SDU.

10. The secure communication system according to claim 5, wherein
the security process is executed for RLC-PDU only if Polling bit within an RLC header is set to a value with which acknowledge is requested to a reception side.

11. The secure communication system according to claim 5, wherein
the security process is executed only for Length Indicator within RLC-PDU.

12. The secure communication system according to claim 5, wherein
the security process is executed only for a valid data portion within RLC-PDU.

13. The secure communication system according to claim 5, wherein
the security process is executed only for a predetermined number of bits from the beginning of a payload within RLC-PDU.

14. The secure communication system according to claim 5, wherein
the security process is executed for RLC-PDU stored within an Iub-FP frame only if CFN within an Iub-FP header is a multiple of a certain integer.

15. The secure communication system according to claim 5, wherein
the security process is executed for RLC-PDU stored within an Iub-FP frame only if CFN within an Iub-FP header is a predetermined number.

16. The secure communication system according to any one of claims 1-15, wherein
a method for deciding a data range to be concealed is changed during a communication.

17. The secure communication system according to any one of claims 1 through 15, wherein
a parameter for deciding a data range to be concealed is changed during a communication.

18. A secure communication method for concealing a communication between a wireless network control device that can terminate a wireless protocol, and a mobile device that can also terminate a wireless protocol and communicates with a base station by transmitting/receiving a radio wave, comprising the steps of:
determining whether or not to require a security process for transmitted/received data; and
restricting a data range to be concealed of the data according to a determination made by said determination step, and encrypting only the restricted range of the dada.

19. The secure communication method according to claim 18, wherein
the restricted data range is some frames among a plurality of frames configuring the data.

20. The secure communication method according to claim 18, wherein
the restricted data range is a portion of a frame configuring the data.

21. The secure communication method according to claim 18, wherein
the restricted data range is a portion of some frames among a plurality of frames configuring the data.
